# EUROPEAN PATENT SPECIFICATION

(11) **EP 4 605 495 B1**
(45) Date of publication and mention of the grant of the patent: **25.11.2026**
(21) Application number: 23825607.7
(22) Date of filing: 06.12.2023
(51) Int. Cl.: C10G 5/06, B01D 1/00, B01D 53/00, C10L 3/10, F25J 3/00

(54) **NATURAL GAS CONDENSATE PROCESSING**
ERDGASKONDENSATVERARBEITUNG
TRAITEMENT DE CONDENSAT DE GAZ NATUREL

(30) Priority: 07.12.2022 IT 202200025143
(43) Date of publication of application: 27.08.2025
(73) Proprietor: Nuovo Pignone S.r.l., 50100 Firenze (FI) (IT)
(72) Inventor: BILDESHEIM, Jochen, 60313 Frankfurt, Hesse (DE)
(74) Representative: Novagraaf Group
(86) International application number: PCT/EP2023/025512
(87) International publication number: WO 2024/120656

(56) References cited:
- WO-A2-2014/173599
- US-A- 5 421 167
- US-A1- 2015 013 379

## Description

### TECHNICAL FIELD

The present disclosure concerns natural gas processing. Embodiments disclosed herein specifically concern a natural gas processing method wherein hydrocarbon condensed in a natural gas pipeline or during gas compression is processed before undergoing treatments including free water removal, drying, mercury removal and natural gas filtering. Also disclosed herein is a system for processing natural gas condensate by reducing investment costs.

### BACKGROUND ART

Heavy hydrocarbons often condense in natural gas pipelines or during gas compression. The amount of hydrocarbons condensate, as well as the amount of water condensate, depends on natural gas compositions, pressure and temperature. Several scenarios can occur during gas pipelines operation. Pressure drop, heat transfer between soil and gas, flow, type of land and network topology are critical aspects.

According to the current art, in natural gas processing plants the condensates are treated separately from the gas stream. A separator is present to separate a gas/vapor fraction from the condensates. Moreover, when the temperature is below the water dew point, the separator is configured to additionally separate the heavier water condensate from the hydrocarbon condensate. The separated hydrocarbon condensate is subsequently separately treated before being sent to storage or to a fractionation unit. Specific required treatment steps depend on the product specifications.

For example, hydrocarbon condensate treatment steps may involve residual free water removal, drying, mercury adsorption, filtering and condensate stripping, to obtain a stabilized hydrocarbon condensate and a vapor fraction that is routed back to the three-phase separator. While the treatment steps of the gas/vapor fraction from the separator may include compression, cooling, separation in a second separator (called knockout drum), drying, mercury adsorption and filtering, before routing the remained gas stream to the final intended use.

Such approaches negatively affect the costs of the system, in terms of capital expenditure costs and overall footprint, due to the need to provide for a big number of equipment. US 5 421 167 A discloses a method for recovering olefins from a cracking furnace effluent stream in an olefins plant. WO 2014/173599 A2 discloses treatment of natural gas to produce a liquefied hydrocarbon stream. US 2015/013379 A1 discloses a method for formation of a liquefied natural gas (LNG).

Accordingly, an improved method and system for natural gas condensate processing to address the issues of complexity and costs of the methods and systems of the current art would be beneficial and would be welcome in the technology. More in general, it would be desirable to provide methods and systems adapted to more efficiently address problems entailed by hydrocarbon condensation due to increasing pressure and/or reducing temperatures in a system comprising a natural gas stream.

### SUMMARY

The present invention is defined in the accompanying claims. In one aspect, the subject matter disclosed herein is directed to a natural gas processing method wherein hydrocarbons condensed in a natural gas pipeline or during gas compression are separated, as a condensate stream, comprised of heavy hydrocarbons and amounts of other components, such as, in particular, water, from a non-condensed light hydrocarbon vapor stream, to be re-injected into the non-condensed light hydrocarbon vapor stream after the light hydrocarbon vapor stream has been compressed and/or the condensate stream has been heated or even vaporized. In particular, the condensate stream is re-injected into the light hydrocarbon vapor stream before treatments preliminary to storage or fractionation thereof. Such treatments can include, for example, free water removal, drying, mercury removal and hydrocarbon filtering. The natural gas processing method comprises controlling the temperature of the natural gas stream after re-injection and, if the temperature is below the natural gas dew point, then increasing the energy of the system by compressing the light hydrocarbon vapor stream and/or heating or even vaporizing the condensate stream before re-injecting it into the light hydrocarbon vapor stream.

A further aspect of the present disclosure is drawn to a natural gas processing system including a separator, to separate a light hydrocarbon vapor stream and a condensate stream, a gas compressor adapted to compress the light hydrocarbon vapor stream and/or a heater adapted to heat the condensate stream, a pump adapted to re-inject the condensate stream into the light hydrocarbon vapor stream at the suction or discharge side of the gas compressor and a temperature control, configured to operate the gas compressor and/or the heater. In particular, the separator is configured to additionally separate the heavier water condensate from the hydrocarbon condensate, when the temperature is below the water dew point. Moreover, the natural gas processing system can include a heater for heating the condensate stream before re-injecting it into the light hydrocarbon vapor stream.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a schematic of a system for processing natural gas, according to an embodiment of the present disclosure; and
Fig. 2 illustrate a flow chart of a method for processing natural gas according to the present disclosure.

### DETAILED DESCRIPTION OF EMBODIMENTS

According to one aspect, the present subject matter is directed to a method and a system for processing a natural gas stream, following condensation of a fraction of the natural gas stream, as a consequence of pressure drop and/or cooling of the stream.

According to another aspect, the subject matter disclosed herein is directed to a method and a system for processing a partially condensed natural gas stream by separating a condensate stream from a non-condensed light hydrocarbon vapor stream, increasing the energy of the light hydrocarbon vapor or the condensate stream and re-injecting the condensate stream into the light hydrocarbon vapor stream, before treating and subsequent storing and or fractionation of the natural gas stream. The temperature of the natural gas stream downstream the re-injection of the condensate stream into the light hydrocarbon vapor stream is controlled to remain above the natural gas stream dew point. If the temperature is lower than the natural gas stream dew point, then the condensate stream is heated before re-injection into the light hydrocarbon vapor stream. In particular, heating of the condensate stream can also comprise vaporizing at least part of the condensate stream before re-injecting it into the light hydrocarbon vapor stream.

Moreover, according to another aspect, if the temperature of the natural gas stream downstream the re-injection of the condensate stream into the light hydrocarbon vapor stream is higher than 10 °C above the natural gas dew point, then the natural gas stream downstream the re-injection point is cooled.

According to an aspect, the treatments following re-injection of the condensate stream into the light hydrocarbon vapor stream, before storing and or fractionation of the natural gas stream, can include free water removal, drying, mercury adsorption, filtering, and condensate stripping.

Specifically, a natural gas processing system is disclosed herein, the system including a two or three-phase separator adapted to separate a natural gas stream into a light hydrocarbon vapor stream and a condensate stream or into a light hydrocarbon vapor stream, a heavy hydrocarbon condensate stream and a water stream; a gas compressor to compress the light hydrocarbon vapor stream and/or a heater to heat the condensate stream, and a pump to re-inject the heavy hydrocarbon condensate stream into the light hydrocarbon vapor stream. The system can also comprise a vaporizer, to vaporize the condensate stream upstream re-injecting it into the light hydrocarbon vapor stream. Downstream the re-injection point, the natural gas processing system comprises a temperature control adapted to maintain the temperature of the natural gas stream above the natural gas dew point, by operating the gas compressor, the heater and/or the vaporizer.

According to one aspect, downstream the re-injection point, the natural gas processing system comprises a treatment section, upstream a storage system or a fractionation unit, and the treatment section includes a knock out drum, to separate residual water, and can include a dryer, an adsorber adapted to adsorb mercury eventually present in the stream, a filter.

According to one aspect, the heated or even at least partly vaporized condensate stream can be re-injected alternatively into the suction or discharge side of the gas compressor. Moreover, the knock out drum of the treatment section is operated below the water dew point. A cooler can be present downstream the re-injection point, for cooling the natural gas stream in case its temperature is higher than the water dew point.

According to a more general aspect, disclosed herein is an improved method and a system for processing and at least partly condensed natural gas stream, wherein the method and system do not comprise a separate condensate treatment section, except for an optional heat exchange step and unit adapted to heat or even vaporize the condensate before re-injecting it into the non-condensed natural gas fraction, so that the condensate can be subsequently treated together with the light hydrocarbons. In particular, the method and system for processing and at least partly condensed natural gas stream comprises separating a light hydrocarbon vapor stream and a condensate stream, increasing the energy of the light hydrocarbon vapor stream or the condensate stream and re-injecting the condensate stream into the light hydrocarbon vapor stream, before treating and subsequent storing and or fractionation of the natural gas stream comprised of the re-injected condensate stream and of the light hydrocarbon vapor stream. Increasing of the energy of the light hydrocarbon vapor can be achieved by compressing the light hydrocarbon vapor stream and re-injecting the condensate stream into the compressed light hydrocarbon vapor stream, and/or by heating or even vaporizing the condensate stream.

The natural gas processing system can thus be realized by reducing equipment count, plot space and investment costs.

Reference now will be made in detail to embodiments of the disclosure, one or more examples of which are illustrated in the drawings. Each example is provided by way of explanation of the disclosure, not limitation of the disclosure. Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

When introducing elements of various embodiments the articles "a", "an", "the", and "said" are intended to mean that there are one or more of the elements. The terms "comprising", "including", and "having" are intended to be inclusive and mean that there may be additional elements other than the listed elements.

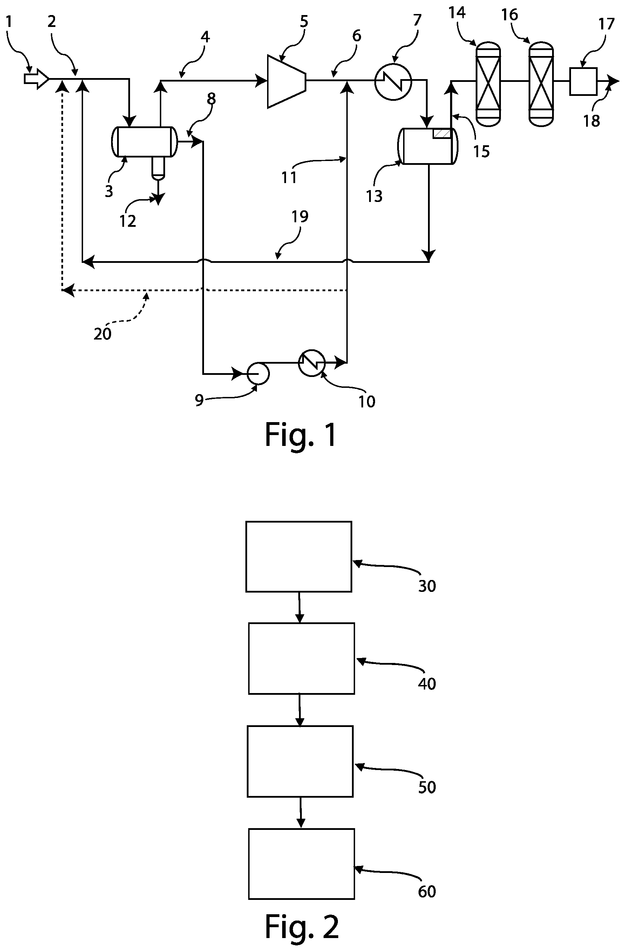

Referring now to the drawings, Fig.1 shows a schematic of an exemplary natural gas processing system. The natural gas processing system is fed with a natural gas feed 1, which is routed via a natural gas feed line 2 to a three-phase separator 3, wherein the natural gas feed is separated into a light hydrocarbon vapor fraction, a heavy hydrocarbon condensate fraction and a water fraction. A light hydrocarbon vapor stream exits the separator 3 through a vapor line 4, to be routed to a gas compressor 5 and subsequently, through a gas compressor discharge line 6, to a cooler 7 and a knock out drum 13. A heavy hydrocarbon condensate stream exits the separator 3 through a condensate line 8, to be routed to a pump 9 and to a condensate heater 10. Downstream the condensate heater 10, through a heated condensate line 11, the heavy hydrocarbon condensate stream is injected to the gas compressor discharge line 6, upstream the cooler 7. Water is withdrawn from the separator 3 through a water discharge line 12.

From the cooler 7, the natural gas stream, comprising both the heated heavy hydrocarbon condensate stream and the compressed light hydrocarbon vapor streams is directed to the knock out drum 13, via a knock out drum feed line 21. The knock out drum 13 is operated above the natural gas dew point and below the water dew point, to condense only water. A natural gas vapor stream from the knock out drum 13 is routed to a dryer 14 through a dryer feed line 15 and subsequently to a Hg adsorber 16 and to a filter 17, to be finally routed to storage or to a fractionation unit (not shown) through an outlet line 18. Water is recirculated to the natural gas feed line 2 through a water condensate recirculation line 19.

A temperature meter (not shown) is used to control the temperature of the natural gas stream in the knock out drum feed line 21. If the temperature is between the natural gas dew point and the water dew point, then both the cooler 7 and the heater 10 are off. If the temperature is lower than the natural gas dew point, then the heater 10 is used to heat the heavy hydrocarbon condensate stream. If the temperature is higher than the water dew point, then the cooler 7 is used to cool the natural gas stream downstream the re-injection point.

In some embodiments, at least a portion of the heated heavy hydrocarbon condensate from the condensate heater 10 can be withdrawn from the heated heavy hydrocarbon condensate line 11 to be recirculated to the natural gas feed line 2 through a natural gas recirculation line 20.

Fig. 2 shows a flowchart summarizing the method disclosed herein for processing an at least partially condensed natural gas stream prior to storage or fractionation. The natural gas processing method includes the following subsequent steps:
- separating (30) an at least partially condensed natural gas stream into a condensate stream and a light hydrocarbon vapor stream;
- increasing the energy (40) of the light hydrocarbon vapor stream and/or the condensate stream;
- re-injecting (50) the condensate stream into the light hydrocarbon vapor stream; and
- controlling (60) the temperature of the natural gas stream.

In some embodiments, the step of increasing the energy (40) of the light hydrocarbon vapor stream and/or the condensate stream includes heating or even at least partly vaporizing the heavy hydrocarbon condensate stream and re-injecting the condensate stream into the light hydrocarbon vapor stream and/or compressing the light hydrocarbon vapor stream and re-injecting the condensate stream into the compressed light hydrocarbon vapor stream.

In some embodiments, the final step of treating (60) the natural gas stream includes at least separating free water and drying. In other embodiments, downstream the step of drying, the final step of treating (60) the natural gas stream includes removing Hg and filtering.

In some embodiments, in order to maintain the temperature of the natural gas stream above the natural gas dew point, before the step of re-injecting (50) the condensate stream into the light hydrocarbon vapor stream, the method disclosed herein comprises a step of heating the condensate stream. In particular, heating is needed in case the ratio between the optionally compressed light hydrocarbons vapor stream and the condensate stream is too low to allow the whole condensate to vaporize when mixing together with the light hydrocarbon vapor stream.

In some embodiments, in order to maintain the temperature of the natural gas stream below the water dew point, the method disclosed herein comprises a step of cooling the natural gas stream after the step of re-inj ecting (50) the condensate stream into the light hydrocarbon vapor stream. In particular, cooling can be needed in summertime, when the environment temperature is high and heat exchange between the environment and the natural gas stream can cause an undesired heating of the natural gas stream.

In some embodiments, before the step of re-injecting (50) the condensate stream into the light hydrocarbon vapor stream, a step of withdrawing a portion of the condensate stream and recirculating it to the step of separating (30) the at least partially condensed natural gas stream into a condensate stream and a light hydrocarbon vapor stream is provided.

Unless specified otherwise herein, the order or sequence of any process or method steps may be varied or re-sequenced according to alternative embodiments.

## Claims

1. A method for processing a natural gas stream, wherein the natural gas stream is at least partially condensed; the method comprising the steps of:
- separating (30) the at least partially condensed natural gas stream into a condensate stream (8) and a light hydrocarbon vapor stream (4);
- increasing the energy (40) of the light hydrocarbon vapor stream and/or the condensate stream; and
- re-injecting (50) the condensate stream (8) into the light hydrocarbon vapor stream with a pump (9);
- **characterized by** controlling (60) the temperature of the natural gas stream, following the step of re-injecting (50) the condensate stream into the light hydrocarbon vapor stream, with a temperature control which operates a cooler (7) and at least one of a gas compressor (5) adapted to compress the light hydrocarbon vapor stream (4) and/or a heater (10) configured to heat the condensate stream (8); wherein the cooler is adapted to cool the temperature of the natural gas stream (6),
wherein the step of increasing the energy (40) of the light hydrocarbon vapor stream and/or the condensate stream is operated according to the step of controlling (60) the temperature of the natural gas stream (6), following the step of re-injecting (50) the condensate stream into the light hydrocarbon vapor stream, to maintain the temperature of the natural gas stream (6), following the step of re-injecting (50) the condensate stream into the light hydrocarbon vapor stream higher than the natural gas dew point.

2. The method for processing a natural gas stream of claim 1, wherein said step of increasing the energy (40) of the light hydrocarbon vapor stream comprises the step of compressing the light hydrocarbon vapor stream before the step of re-injecting (50) the condensate stream into the light hydrocarbon vapor stream.

3. The method for processing a natural gas stream of claim 1 or 2, wherein said step of increasing the energy (40) of the condensate stream comprises the step of:
- pumping the condensate stream before the step of re-injecting (50) the condensate stream into the light hydrocarbon vapor stream.

4. The method of claim 3, wherein the step of increasing the energy (40) of the condensate stream further comprises the step of:
- heating the condensate stream before the step of re-injecting (50) the condensate stream into the light hydrocarbon vapor stream.

5. The method of claim 4, wherein the step of increasing the energy (40) of the condensate stream further comprises the step of:
- at least partly vaporizing the natural gas of the condensate stream before the step of re-injecting (50) the condensate stream into the light hydrocarbon vapor stream.

6. The method of claim 4 or 5, wherein the step of heating (40) the separated stream uses the waste heat of the step of compressing the vapor hydrocarbon stream.

7. The method of one or more of claims 1 to 6, wherein,
if the temperature measured in the step of controlling (60) the temperature of the natural gas stream, following the step of re-injecting (50) the heavy hydrocarbon condensate stream into the compressed light hydrocarbon vapor stream is higher than the water dew point,
then the method further comprises the step of:
- cooling the natural gas stream after the step of re-injecting (50) the condensate stream into the compressed light hydrocarbon vapor stream.

8. The method of claims 1 to 7, wherein after the step of controlling (60) the temperature of the natural gas stream, following the step of re-injecting (50) the heavy hydrocarbon condensate stream into the compressed light hydrocarbon vapor stream, the method includes the steps of:
- separating free water from the natural gas stream; and subsequently
- drying the natural gas stream.

9. The method of claim 8, further comprising a step of recirculating the separated free water to the step of separating (30) the at least partially condensed natural gas stream into a condensate stream and a light hydrocarbon vapor stream.

10. The method of claim 8 or 9, also including the following steps, subsequent to the drying step:
- removing Hg from the natural gas stream; and
- filtering the natural gas stream.

11. The method of one or more of claims 1 to 10, further comprising, after the step of separating (30) the at least partially condensed natural gas stream into a condensate stream and a light hydrocarbon vapor stream and before the step of re-injecting (50) the condensate stream into the light hydrocarbon vapor stream, the following steps:
- withdrawing a portion of the condensate stream; and
- recirculating the withdrawn portion of condensate stream to the step of separating (30) the at least partially condensed natural gas stream into a condensate stream and a vapor natural gas stream.

12. The method of one or more of claims 1 to 11, further comprising, after the step of separating (30) the at least partially condensed natural gas stream into a condensate stream and a light hydrocarbon vapor stream and before the step of re-injecting (50) the condensate stream into the light hydrocarbon vapor stream, the following step:
- separating a water stream from the condensate stream.

13. A system for processing a natural gas stream (1), the system comprising:
a separator (3) adapted to separate a light hydrocarbon vapor stream (4) and a condensate stream (8);
a gas compressor (5) adapted to compress the light hydrocarbon vapor stream (4) and/or a heater (10) configured to heat the condensate stream (8);
a pump (9) adapted to increase the pressure of the condensate stream (8) and convey the condensate stream (8) and re-inject the condensate stream through a condensate stream line (11) and into the light hydrocarbon vapor stream (4) in a natural gas stream (6);
a cooler (7) adapted to cool the temperature of the natural gas stream (6); and
a temperature control of the natural gas stream (6), configured to operate the gas compressor (5) and/or the heater (10) and the cooler (7) to maintain the temperature of the natural gas stream (6), following the re-injection of the condensate stream into the light hydrocarbon vapor stream, higher than the natural gas dew point.

14. The system of claim 13, further comprising a vaporizer, configured to vaporize the condensate stream (8).

15. The system of claim 13 or 14, wherein the heater (10) is arranged downstream the pump (9) along the condensate stream line (11).

16. The system of one or more of claims 13-15, wherein the separator (3) is a three-phase separator (3), adapted to additionally separate a water stream from the condensate stream.

17. The system of one or more of claims 13-16, further comprising a knock out drum (13), downstream the cooler (7), the knock out drum (13) being adapted to separate a water condensate stream and a natural gas vapor stream.

18. The system of claim 17, further comprising a dryer (14), downstream the knock out drum (13), adapted to dry the natural gas vapor stream from the knock out drum (13).

19. The system of claim 18, further comprising a mercury adsorber (16), downstream the dryer (14).

20. The system of claim 18 or 19, further comprising a filter (17), downstream the dryer (14) and/or the mercury adsorber (16).

21. The system of one or more of claims 17-20, further comprising a water condensate recirculation line (19) from the knock out drum (13) to the separator (3).

22. The system of one or more of claims 13-21, further comprising a heavy hydrocarbon recirculation line (20) from the condensate stream line (11) to the separator (3).

## Patentansprüche

1. Verfahren zum Verarbeiten eines Erdgasstroms, wobei der Erdgasstrom mindestens teilweise kondensiert ist; das Verfahren umfassend die Schritte:
- Separieren (30) des mindestens teilweise kondensierten Erdgasstroms in einen Kondensatstrom (8) und einen leichten Kohlenwasserstoffdampfstrom (4);
- Erhöhen der Energie (40) des leichten Kohlenwasserstoffdampfstroms und/oder des Kondensatstroms; und
- Wiedereinspritzen (50) des Kondensatstroms (8) in den leichten Kohlenwasserstoffdampfstrom mit einer Pumpe (9);
- **gekennzeichnet durch** Steuern (60) der Temperatur des Erdgasstroms im Anschluss an den Schritt des Wiedereinspritzens (50) des Kondensatstroms in den leichten Kohlenwasserstoffdampfstrom mit einer Temperatursteuerung, die einen Kühler (7) und mindestens eines von einem Gaskompressor (5), der angepasst ist, um den leichten Kohlenwasserstoffdampfstrom (4) zu komprimieren, und/oder einer Heizvorrichtung (10) betreibt, die konfiguriert ist, um den Kondensatstrom (8) zu erhitzen; wobei der Kühler angepasst ist, um die Temperatur des Erdgasstroms (6) zu kühlen,
wobei der Schritt des Erhöhens der Energie (40) des leichten Kohlenwasserstoffdampfstroms und/oder des Kondensatstroms gemäß dem Schritt des Steuerns (60) der Temperatur des Erdgasstroms (6) im Anschluss an den Schritt des Wiedereinspritzens (50) des Kondensatstroms in den leichten Kohlenwasserstoffdampfstrom betrieben wird, um die Temperatur des Erdgasstroms (6) im Anschluss an den Schritt des Wiedereinspritzens (50) des Kondensatstroms in den leichten Kohlenwasserstoffdampfstrom höher als den Erdgastaupunkt zu halten.

2. Verfahren zum Verarbeiten eines Erdgasstroms nach Anspruch 1, wobei der Schritt des Erhöhens der Energie (40) des leichten Kohlenwasserstoffdampfstroms den Schritt des Komprimierens des leichten Kohlenwasserstoffdampfstroms vor dem Schritt des Wiedereinspritzens (50) des Kondensatstroms in den leichten Kohlenwasserstoffdampfstrom umfasst.

3. Verfahren zum Verarbeiten eines Erdgasstroms nach Anspruch 1 oder 2, wobei der Schritt des Erhöhens der Energie (40) des Kondensatstroms den Schritt umfasst:
- Pumpen des Kondensatstroms vor dem Schritt des Wiedereinspritzens (50) des Kondensatstroms in den leichten Kohlenwasserstoffdampfstrom.

4. Verfahren nach Anspruch 3, wobei der Schritt des Erhöhens der Energie (40) des Kondensatstroms ferner den Schritt umfasst:
- Erhitzen des Kondensatstroms vor dem Schritt des Wiedereinspritzens (50) des Kondensatstroms in den leichten Kohlenwasserstoffdampfstrom.

5. Verfahren nach Anspruch 4, wobei der Schritt des Erhöhens der Energie (40) des Kondensatstroms ferner den Schritt umfasst:
- mindestens teilweises Verdampfen des Erdgases des Kondensatstroms vor dem Schritt des Wiedereinspritzens (50) des Kondensatstroms in den leichten Kohlenwasserstoffdampfstrom.

6. Verfahren nach Anspruch 4 oder 5, wobei der Schritt des Erhitzens (40) des separierten Stroms die Abwärme des Schritts des Komprimierens des Kohlenwasserstoffdampfstroms verwendet.

7. Verfahren nach einem oder mehreren der Ansprüche 1 bis 6, wobei, falls die Temperatur, die in dem Schritt des Steuerns (60) der Temperatur des Erdgasstroms im Anschluss an den Schritt des Wiedereinspritzens (50) des schweren Kohlenwasserstoffkondensatstroms in den komprimierten leichten Kohlenwasserstoffdampfstrom gemessen wird, höher als der Wassertaupunkt ist, das Verfahren dann ferner den Schritt umfasst:
- Kühlen des Erdgasstroms nach dem Schritt des Wiedereinspritzens (50) des Kondensatstroms in den komprimierten leichten Kohlenwasserstoffdampfstrom.

8. Verfahren nach den Ansprüchen 1 bis 7, wobei nach dem Schritt des Steuerns (60) der Temperatur des Erdgasstroms im Anschluss an den Schritt des Wiedereinspritzens (50) des schweren Kohlenwasserstoffkondensatstroms in den komprimierten leichten Kohlenwasserstoffdampfstrom das Verfahren die Schritte einschließt:
- Separieren von freiem Wasser aus dem Erdgasstrom; und infolge
- Trocknen des Erdgasstroms.

9. Verfahren nach Anspruch 8, ferner umfassend einen Schritt eines Rückführens des separierten freien Wassers zu dem Schritt des Separierens (30) des mindestens teilweise kondensierten Erdgasstroms in einen Kondensatstrom und einen leichten Kohlenwasserstoffdampfstrom.

10. Verfahren nach Anspruch 8 oder 9, das folgend auf den Trocknungsschritt auch die nachstehenden Schritte einschließt:
- Entfernen von Hg aus dem Erdgasstrom; und
- Filtern des Erdgasstroms.

11. Verfahren nach einem oder mehreren der Ansprüche 1 bis 10, ferner umfassend, nach dem Schritt des Separierens (30) des mindestens teilweise kondensierten Erdgasstroms in einen Kondensatstrom und einen leichten Kohlenwasserstoffdampfstrom und vor dem Schritt des Wiedereinspritzens (50) des Kondensatstroms in den leichten Kohlenwasserstoffdampfstrom, die nachstehenden Schritte:
- Abziehen eines Anteils des Kondensatstroms; und
- Rückführen des abgezogenen Anteils des Kondensatstroms zu dem Schritt des Separierens (30) des mindestens teilweise kondensierten Erdgasstroms in einen Kondensatstrom und einen Erdgasdampfstrom.

12. Verfahren nach einem oder mehreren der Ansprüche 1 bis 11, ferner umfassend, nach dem Schritt des Separierens (30) des mindestens teilweise kondensierten Erdgasstroms in einen Kondensatstrom und einen leichten Kohlenwasserstoffdampfstrom und vor dem Schritt des Wiedereinspritzens (50) des Kondensatstroms in den leichten Kohlenwasserstoffdampfstrom, den nachstehenden Schritt:
- Separieren eines Wasserstroms aus dem Kondensatstrom.

13. System zum Verarbeiten eines Erdgasstroms (1), das System umfassend:
einen Separator (3), der angepasst ist, um einen leichten Kohlenwasserstoffdampfstrom (4) und einen Kondensatstrom (8) zu separieren;
ein Gaskompressor (5), der angepasst ist, um den leichten Kohlenwasserstoffdampfstrom (4) zu komprimieren, und/oder eine Heizvorrichtung (10), die konfiguriert ist, um den Kondensatstrom (8) zu erhitzen;
eine Pumpe (9), die angepasst ist, um den Druck des Kondensatstroms (8) zu erhöhen und den Kondensatstrom (8) zu fördern und den Kondensatstrom durch eine Kondensatstromleitung (11) und in den leichten Kohlenwasserstoffdampfstrom (4) in einem Erdgasstrom (6) wieder einzuspritzen;
einen Kühler (7), der angepasst ist, um die Temperatur des Erdgasstroms (6) zu kühlen; und eine Temperatursteuerung des Erdgasstroms (6), die konfiguriert ist, um den Gaskompressor (5) und/oder die Heizvorrichtung (10) und den Kühler (7) zu betreiben, um die Temperatur des Erdgasstroms (6) im Anschluss an die Wiedereinspritzung des Kondensatstroms in den leichten Kohlenwasserstoffdampfstrom höher als den Erdgastaupunkt zu halten.

14. System nach Anspruch 13, ferner umfassend einen Verdampfer, der konfiguriert ist, um den Kondensatstrom (8) zu verdampfen.

15. System nach Anspruch 13 oder 14, wobei die Heizvorrichtung (10) stromabwärts der Pumpe (9) entlang der Kondensatstromleitung (11) angeordnet ist.

16. System nach einem oder mehreren der Ansprüche 13 bis 15, wobei der Separator (3) ein Dreiphasenseparator (3) ist, der angepasst ist, um zusätzlich einen Wasserstrom von dem Kondensatstrom zu separieren.

17. System nach einem oder mehreren der Ansprüche 13 bis 16, ferner umfassend einen Abscheidebehälter (13) stromabwärts des Kühlers (7), wobei der Abscheidebehälter (13) angepasst ist, um einen Wasserkondensatstrom und einen Erdgasdampfstrom zu separieren.

18. System nach Anspruch 17, ferner umfassend einen Trockner (14) stromabwärts des Abscheidebehälters (13), der angepasst ist, um den Erdgasdampfstrom aus dem Abscheidebehälter (13) zu trocknen.

19. System nach Anspruch 18, ferner umfassend einen Quecksilberadsorber (16) stromabwärts des Trockners (14).

20. System nach Anspruch 18 oder 19, ferner umfassend einen Filter (17) stromabwärts des Trockners (14) und/oder des Quecksilberadsorbers (16).

21. System nach einem oder mehreren der Ansprüche 17 bis 20, ferner umfassend eine Wasserkondensatrückführungsleitung (19) von dem Abscheidebehälter (13) zu dem Separator (3).

22. System nach einem oder mehreren der Ansprüche 13-21, ferner umfassend eine Rückführungsleitung (20) für schweren Kohlenwasserstoff von der Kondensatstromleitung (11) zu dem Separator (3).

## Revendications

1. Procédé de traitement d'un flux de gaz naturel, dans lequel le flux de gaz naturel est au moins partiellement condensé ; le procédé comprenant les étapes consistant à :
- séparer (30) le flux de gaz naturel au moins partiellement condensé en un flux de condensat (8) et un flux de vapeur d'hydrocarbures légers (4) ;
- augmenter l'énergie (40) du flux de vapeur d'hydrocarbures légers et/ou du flux de condensat ; et
- réinjecter (50) le flux de condensat (8) dans le flux de vapeur d'hydrocarbures légers avec une pompe (9) ;
- **caractérisé par** la régulation (60) de la température du flux de gaz naturel, après l'étape consistant à réinjecter (50) le flux de condensat dans le flux de vapeur d'hydrocarbures légers, avec une régulation de température qui actionne un refroidisseur (7) et au moins l'un parmi un compresseur de gaz (5) adapté pour comprimer le flux de vapeur d'hydrocarbures légers (4) et/ou un dispositif de chauffage (10) configuré pour chauffer le flux de condensat (8) ; dans lequel le refroidisseur est adapté pour abaisser la température du flux de gaz naturel (6),
dans lequel l'étape consistant à augmenter l'énergie (40) du flux de vapeur d'hydrocarbures légers et/ou du flux de condensat est mise en œuvre selon l'étape consistant à réguler (60) la température du flux de gaz naturel (6), à la suite de l'étape consistant à réinjecter (50) le flux de condensat dans le flux de vapeur d'hydrocarbures légers, pour maintenir la température du flux de gaz naturel (6), à la suite de l'étape consistant à réinjecter (50) le flux de condensat dans le flux de vapeur d'hydrocarbures légers, supérieure au point de rosée du gaz naturel.

2. Procédé de traitement d'un flux de gaz naturel selon la revendication 1, dans lequel ladite étape consistant à augmenter l'énergie (40) du flux de vapeur d'hydrocarbures légers comprend l'étape consistant à comprimer le flux de vapeur d'hydrocarbures légers avant l'étape consistant à réinjecter (50) le flux de condensat dans le flux de vapeur d'hydrocarbures légers.

3. Procédé de traitement d'un flux de gaz naturel selon la revendication 1 ou 2, dans lequel ladite étape consistant à augmenter l'énergie (40) du flux de condensat comprend l'étape consistant à :
- pomper le flux de condensat avant l'étape consistant à réinjecter (50) le flux de condensat dans le flux de vapeur d'hydrocarbures légers.

4. Procédé selon la revendication 3, dans lequel l'étape consistant à augmenter l'énergie (40) du flux de condensat comprend en outre l'étape consistant à :
- chauffer le flux de condensat avant l'étape consistant à réinjecter (50) le flux de condensat dans le flux de vapeur d'hydrocarbures légers.

5. Procédé selon la revendication 4, dans lequel l'étape consistant à augmenter l'énergie (40) du flux de condensat comprend en outre l'étape consistant à :
- vaporiser au moins partiellement le gaz naturel du flux de condensat avant l'étape consistant à réinjecter (50) le flux de condensat dans le flux de vapeur d'hydrocarbures légers.

6. Procédé selon la revendication 4 ou 5, dans lequel l'étape consistant à chauffer (40) le flux séparé utilise la chaleur résiduelle de l'étape consistant à comprimer le flux d'hydrocarbures en phase vapeur.

7. Procédé selon une ou plusieurs des revendications 1 à 6, dans lequel, si la température mesurée lors de l'étape consistant à réguler (60) la température du flux de gaz naturel, à la suite de l'étape consistant à réinjecter (50) le flux de condensat d'hydrocarbures lourds dans le flux de vapeur d'hydrocarbures légers comprimé, est supérieure au point de rosée de l'eau, alors le procédé comprend en outre l'étape consistant à :
- refroidir le flux de gaz naturel après l'étape consistant à réinjecter (50) le flux de condensat dans le flux de vapeur d'hydrocarbures légers comprimé.

8. Procédé selon les revendications 1 à 7, dans lequel après l'étape consistant à réguler (60) la température du flux de gaz naturel, à la suite de l'étape consistant à réinjecter (50) le flux de condensat d'hydrocarbures lourds dans le flux de vapeur d'hydrocarbures légers comprimé, le procédé comprend les étapes consistant à :
- séparer l'eau libre du flux de gaz naturel ; et ensuite
- sécher le flux de gaz naturel.

9. Procédé selon la revendication 8, comprenant en outre une étape consistant à remettre en circulation l'eau libre séparée vers l'étape consistant à séparer (30) le flux de gaz naturel au moins partiellement condensé en un flux de condensat et un flux de vapeur d'hydrocarbures légers.

10. Procédé selon la revendication 8 ou 9, incluant également les étapes suivantes, à la suite de l'étape de séchage :
- éliminer le Hg du flux de gaz naturel ; et
- filtrer le flux de gaz naturel.

11. Procédé selon une ou plusieurs des revendications 1 à 10, comprenant en outre, après l'étape consistant à séparer (30) le flux de gaz naturel au moins partiellement condensé en un flux de condensat et un flux de vapeur d'hydrocarbures légers et avant l'étape consistant à réinjecter (50) le flux de condensat dans le flux de vapeur d'hydrocarbures légers, les étapes suivantes :
- soutirer une partie du flux de condensat ; et
- remettre en circulation la partie soutirée du flux de condensat vers l'étape consistant à séparer (30) le flux de gaz naturel au moins partiellement condensé en un flux de condensat et un flux de gaz naturel en phase vapeur.

12. Procédé selon une ou plusieurs des revendications 1 à 11, comprenant en outre, après l'étape consistant à séparer (30) le flux de gaz naturel au moins partiellement condensé en un flux de condensat et un flux de vapeur d'hydrocarbures légers et avant l'étape consistant à réinjecter (50) le flux de condensat dans le flux de vapeur d'hydrocarbures légers, l'étape suivante :
- séparer un flux d'eau du flux de condensat.

13. Système pour traiter un flux de gaz naturel (1), le système comprenant :
un séparateur (3) adapté pour séparer un flux de vapeur d'hydrocarbures légers (4) et un flux de condensat (8) ;
un compresseur de gaz (5) adapté pour comprimer le flux de vapeur d'hydrocarbures légers (4) et/ou un dispositif de chauffage (10) configuré pour chauffer le flux de condensat (8) ;
une pompe (9) adaptée pour augmenter la pression du flux de condensat (8) et acheminer le flux de condensat (8) et réinjecter le flux de condensat par une ligne de flux de condensat (11) et dans le flux de vapeur d'hydrocarbures légers (4) dans un flux de gaz naturel (6) ;
un refroidisseur (7) adapté pour abaisser la température du flux de gaz naturel (6) ; et
une régulation de température du flux de gaz naturel (6), configurée pour actionner le compresseur de gaz (5) et/ou le dispositif de chauffage (10) et le refroidisseur (7) pour maintenir la température du flux de gaz naturel (6), à la suite de la réinjection du flux de condensat dans le flux de vapeur d'hydrocarbures légers, supérieure au point de rosée du gaz naturel.

14. Système selon la revendication 13, comprenant en outre un vaporisateur, configuré pour vaporiser le flux de condensat (8).

15. Système selon la revendication 13 ou 14, dans lequel le dispositif de chauffage (10) est agencé en aval de la pompe (9) le long de la ligne de flux de condensat (11).

16. Système selon une ou plusieurs des revendications 13 à 15, dans lequel le séparateur (3) est un séparateur à trois phases (3), adapté pour séparer en outre un flux d'eau du flux de condensat.

17. Système selon une ou plusieurs des revendications 13 à 16, comprenant en outre un ballon séparateur (13), en aval du refroidisseur (7), le ballon séparateur (13) étant adapté pour séparer un flux de condensat d'eau et un flux de vapeur de gaz naturel.

18. Système selon la revendication 17, comprenant en outre un sécheur (14), en aval du ballon séparateur (13), adapté pour sécher le flux de vapeur de gaz naturel provenant du ballon séparateur (13).

19. Système selon la revendication 18, comprenant en outre un adsorbeur de mercure (16), en aval du sécheur (14).

20. Système selon la revendication 18 ou 19, comprenant en outre un filtre (17), en aval du sécheur (14) et/ou de l'adsorbeur de mercure (16).

21. Système selon une ou plusieurs des revendications 17 à 20, comprenant en outre une ligne de remise en circulation de condensat d'eau (19) allant du ballon séparateur (13) au séparateur (3).

22. Système selon une ou plusieurs des revendications 13 à 21, comprenant en outre une ligne de remise en circulation d'hydrocarbures lourds (20) allant de la ligne de flux de condensat (11) au séparateur (3).
